# FASCICULE DE BREVET EUROPEEN

(11) **EP 1 923 246 B1**
(45) Date de publication et mention de la délivrance du brevet: **26.05.2010**
(21) Numéro de dépôt: 07301507.5
(22) Date de dépôt: 29.10.2007
(51) Int. Cl.: B60J 7/00, B60J 7/08, B60J 7/185

(54) **Pavillon de toit rigide modulable d'un véhicule automobile**
Modulierbares Hardtop eines Kraftfahrzeugs
Modular rigid roof top of an automobile

(30) Priorité: 16.11.2006 FR 0654949
(43) Date de publication de la demande: 21.05.2008
(73) Titulaire: Peugeot Citroën Automobiles Société Anonyme, 78140 Velizy Villacoublay (FR)
(72) Inventeur: Bertrand Belanger, Pascal, 78280 Guyancourt (FR)
(74) Mandataire: Allain, Laurent

(56) Documents cités:
- AU-A- 4 039 872
- DE-A1- 3 103 062
- DE-U1- 20 305 022
- JP-A- 2000 052 777

## Description

La présente invention concerne un pavillon de toit rigide modulable d'un véhicule automobile.

Dans certains véhicules, tels que des coupés, des monospaces ou des breaks, la garde au toit de la rangée de sièges arrière adjacente au coffre du véhicule est souvent limitée en raison des contraintes de style. Ce cas se produit notamment lorsque la ligne du véhicule présente une chute prononcée du pavillon vers l'arrière du véhicule.

Une garde au toit ainsi limitée peut s'avérer gênante pour des passagers, par exemple des adultes, assis sur les sièges de la rangée arrière.

Le but de la présente invention est de remédier aux inconvénients précités et de proposer un pavillon de toit qui permet, tout en conservant le style désiré, d'augmenter la hauteur de pavillon lorsque cela est nécessaire.

Le document DE 3103062 A1 décrit un pavillon de toit conventionel, présentant un seul panneau rigide.

A cet effet, l'invention concerne un pavillon de toit rigide d'un véhicule automobile caractérisé en ce qu'il comprend une ouverture pouvant être obturée sélectivement par un panneau rigide se trouvant dans le plan du pavillon à sa position de fermeture de l'ouverture ou par un rehausseur de pavillon en forme de caisson rehausseur ouvert renversé en position de fermeture de manière que sa paroi de fond fasse saillie d'une hauteur déterminée par rapport au pavillon.

Selon une autre caractéristique de l'invention, le panneau rigide est monté articulé au bord transversal arrière de l'ouverture et peut être déplacé par basculement autour de son axe d'articulation transversale de sa position de fermeture de l'ouverture à une position dégagée en arrière dans l'habitacle du véhicule.

Selon une autre caractéristique de l'invention, le caisson rehausseur est monté articulé par l'un de ses cotés transversaux au véhicule aux deux extrémités, respectivement de deux bras latéraux, dont les extrémités opposées sont montées articulées au pavillon autour d'un axe transversal au véhicule, situé à proximité du bord transversal avant de l'ouverture, et, lorsque le panneau rigide occupe sa position dégagée en arrière du véhicule, le caisson rehausseur peut être rabattu vers l'avant du véhicule, autour de ses articulations, aux deux bras, contre les deux bras, occupant une position suspendue de manière que les bras soient en appui sur les deux cotés parallèles du caisson rehausseur perpendiculaires aux deux bras, et, l'ensemble constitué par les deux bras, et le caisson rehausseur peut être basculé, autour des axes d'articulation, des deux bras, vers le pavillon de manière à introduire le caisson rehausseur renversé au travers de l'ouverture du pavillon.

Selon une autre caractéristique de l'invention, le caisson rehausseur, lors de son basculement à sa position en appui sur les bras, est amoviblement fixé à ces bras par des moyens de verrouillage déverrouillables manuellement.

Selon une autre caractéristique de l'invention, les moyens de verrouillage du caisson rehausseur aux deux bras, sont chacun constitués par un crochet, solidaire du caisson rehausseur à l'opposé de ses articulations aux bras, et un anneau, solidaire du bras, à proximité de son articulation au pavillon, le crochet de verrouillage pouvant être amoviblement accroché à l'anneau.

Selon une autre caractéristique de l'invention, le caisson rehausseur en position de fermeture est amoviblement fixé au pavillon par des moyens de verrouillage déverrouillables manuellement.

Selon une autre caractéristique de l'invention, les moyens de verrouillage sont constitués par deux pênes latéraux, solidaires des deux bras, et pouvant s'engager respectivement dans deux gâches fixes transversalement espacées du pavillon et situées à proximité du bord transversal arrière de l'ouverture du pavillon.

Selon une autre caractéristique de l'invention, le panneau rigide en position de fermeture est amoviblement fixé au pavillon par des moyens de verrouillage déverrouillables manuellement.

Selon une autre caractéristique de l'invention, les moyens de verrouillage sont constitués par deux pênes latéraux, solidaires du panneau rigide et pouvant s'engager respectivement dans deux gâches fixes transversalement espacées du pavillon et situées à proximité du bord transversal avant de l'ouverture du pavillon.

Selon une autre caractéristique de l'invention, le pavillon de toit comprend un joint d'étanchéité fixé sur les bords périphériques de l'ouverture du pavillon et étant destiné à coopérer sélectivement avec la face supérieure d'une collerette périphérique du panneau rigide en position fermée ou avec la face supérieure d'une collerette périphérique du caisson rehausseur en position fermée.

Selon une autre caractéristique de l'invention, le pavillon de toit comprend des ressorts de rappel montés entre le bord transversal arrière de l'ouverture du pavillon et le bord du panneau rigide qui est monté articulé sur le panneau fixe et permettant d'amener le panneau rigide à sa position dégagée en arrière dans l'habitacle du véhicule.

Selon une autre caractéristique de l'invention, le pavillon de toit comprend deux vérins latéraux d'assistance au basculement du caisson rehausseur solidaire des bras de leur position suspendue à leur position de rehaussage au travers de l'ouverture du pavillon.

Selon une autre caractéristique de l'invention, en position dégagée, le panneau rigide occupe une position suspendue inclinée vers l'arrière du véhicule.

Selon une autre caractéristique de l'invention, en position inactive, le caisson rehausseur occupe une position suspendue aux bras approximativement horizontale.

Selon une autre caractéristique de l'invention, le panneau rigide comprend un cadre rectangulaire fermé par une vitre.

Selon une autre caractéristique de l'invention, le caisson rehausseur est réalisé au moins partiellement par un matériau rigide transparent tel que du verre.

L'invention sera maintenant décrite en détail, en référence aux figures annexées, selon lesquelles :
- la figure 1 est une vue en coupe longitudinale d'un pavillon de toit rigide à panneau rigide et à rehausseur de pavillon selon un premier mode de réalisation de l'invention, le panneau rigide occupant une position de fermeture;
- la figure 2 est une vue en coupe semblable à celle de la figure 1 où le panneau rigide est en position ouverte;
- la figure 3 est une vue en coupe semblable à celle de la figure 1, le panneau rigide étant en position ouverte et le caisson rehausseur en position rabattue;
- la figure 4 est une vue en coupe semblable à celle de la figure 1, le rehausseur de pavillon étant en position de fermeture du toit; et
- la figure 5 est une vue en perspective d'un pavillon de toit selon un second mode de réalisation de l'invention où le panneau rigide est en position suspendue et le caisson rehausseur en position suspendue.

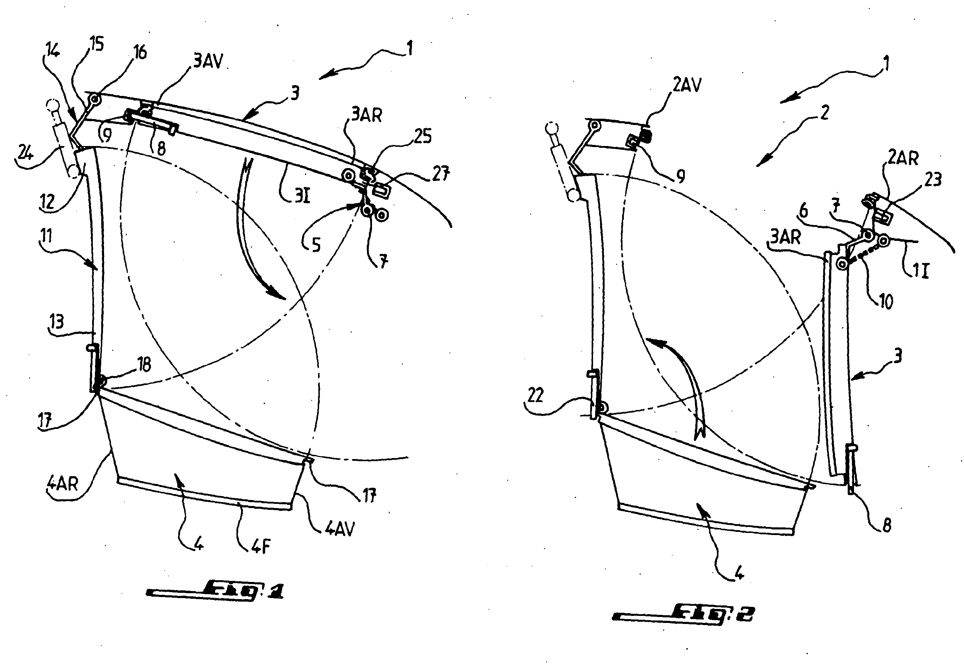

Les figures 1 à 5 représentent un pavillon de toit rigide 1 destiné à recouvrir l'habitacle d'un véhicule automobile dont la ligne présente une chute prononcée en direction de la lunette arrière du véhicule.

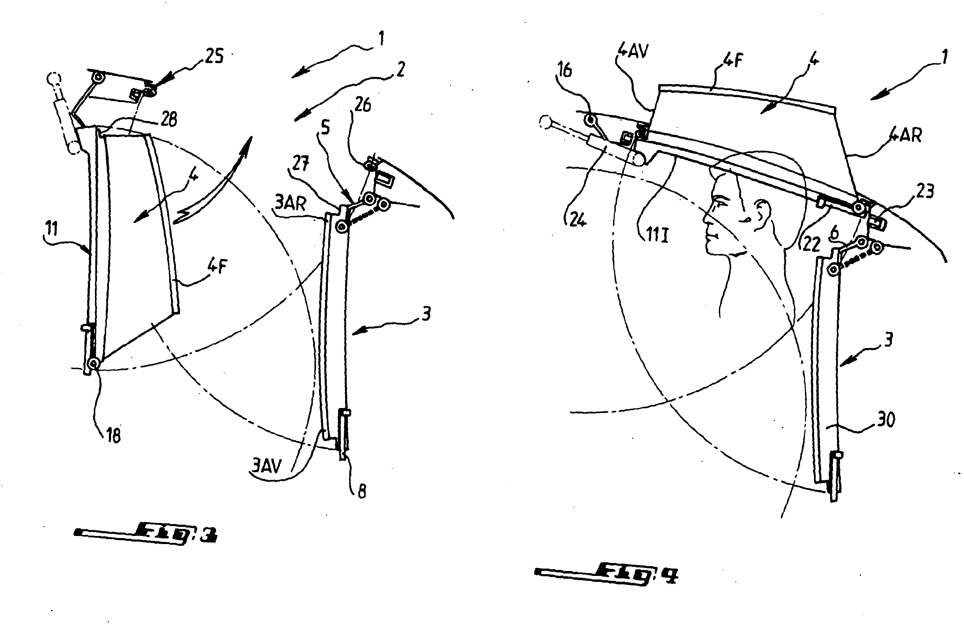

Selon l'invention, le pavillon de toit 1 comprend une ouverture 2 pouvant être obturée sélectivement par un panneau rigide 3 se trouvant dans le plan du pavillon 1 à sa position de fermeture de l'ouverture 2, comme visible à la figure 1, ou par un caisson rehausseur 4 en forme de caisson ouvert renversé en position de fermeture de manière que sa paroi de fond 4F fasse saillie d'une hauteur déterminée par rapport au pavillon 1, comme visible à la figure 4.

L'ouverture 2 du pavillon 1 se situe au-dessus et en regard de la rangée de sièges arrière du véhicule qui n'est pas représenté sur les figures.

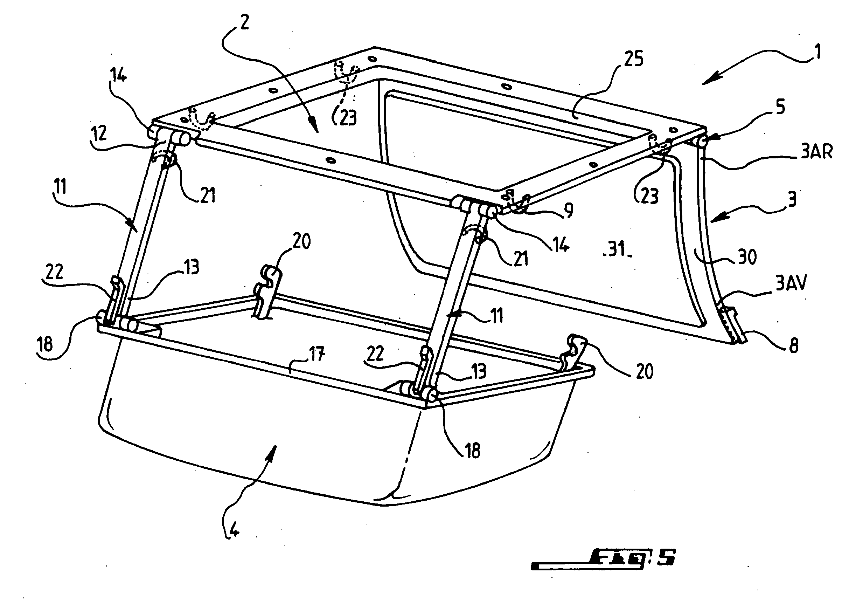

Le bord transversal arrière 3AR du panneau rigide 3 est monté articulé sur le bord transversal arrière 2AR de l'ouverture 2. A cet effet, comme représenté en figure 5, le panneau rigide 3, à proximité de son bord transversal arrière 3AR, est relié à la paroi inférieure 1I du pavillon 1 à proximité du bord transversal arrière 2AR de son ouverture 2 par deux charnières 5 coaxiales et transversalement espacées situées à gauche et à droite du véhicule.

Ainsi, par pivotement autour de son axe d'articulation transversal 7, le panneau rigide 3 peut basculer de sa position de fermeture dans laquelle son bord transversal avant 3AV coopère avec le bord transversal avant 2AV de l'ouverture 2 pour s'y verrouiller, comme représenté à la figure 1, à une position suspendue inclinée vers l'arrière du véhicule, comme représenté aux figures 2 à 4 et 5.

Selon le second mode de réalisation représenté aux figures 1 à 4, chaque charnière transversale d'articulation comporte un bras coudé 6 pouvant pivoter autour de l'axe d'articulation transversal 7 et qui s'étend en avant du véhicule en ayant son extrémité avant solidaire de la paroi inférieure 3I du panneau rigide 3 à proximité du bord transversal arrière 3AR de ce panneau.

Dans sa position de fermeture, le panneau rigide 3 est amoviblement fixé à son bord avant 3AV au pavillon 1 par des moyens de verrouillage 8, 9 qui sont déverrouillables manuellement. Ces moyens sont constitués par des pênes latéraux 8, gauche et droit, solidaires du panneau rigide 3 qui peuvent s'engager respectivement dans des gâches 9 du pavillon 1 de façon à verrouiller le panneau rigide 3 en position fermée. Les pênes latéraux 8 sont situés au niveau de la paroi inférieure 3I du panneau rigide 3, à proximité de son bord transversal avant 3AV. Les gâches 9 sont situées à proximité du bord transversal avant 2AV de l'ouverture 2 du pavillon 1 en étant transversalement espacées et en regard des pênes 8 du panneau rigide 3 lorsque celui-ci est en position fermée.

Il est à noter que le pavillon de toit 1 comprend des ressorts de rappel 10, gauche et droit, qui sont montés entre le pavillon 1 à proximité du bord transversal arrière 2AR de l'ouverture 2 et le panneau rigide 3, à proximité de son bord transversal arrière 3AR, le ressort de rappel droit n'étant pas représenté. Ces ressorts 10 sont transversalement espacés et permettent d'amener le panneau rigide 3 à sa position dégagée en arrière dans l'habitacle du véhicule lorsque les pênes de verrouillage 8 du panneau rigide 3 sont désengagés des gâches 9 du pavillon 1.

Le pavillon de toit 1 comprend deux bras latéraux 11 transversalement espacés, ayant chacun une extrémité 12 au pavillon 1, à proximité du bord transversal avant 2AV de l'ouverture 2 et l'autre extrémité 13 liée au caisson rehausseur 4.

Les bras latéraux 11 sont montés articulés relativement au pavillon 1 entre une position suspendue du caisson rehausseur 4, comme visible sur les figures 1 à 3 et 5, et une position d'obturation de l'ouverture 2 par le caisson rehausseur 4, comme visible sur la figure 4.

Ainsi, par pivotement autour de leurs axes d'articulation 16, les bras latéraux 11 peuvent être déplacés de leur position suspendue approximativement verticale à leur position d'obturation de l'ouverture 2, dans le prolongement du pavillon 1.

Selon le mode de réalisation représenté aux figures 1 à 4, les extrémités 12 de chaque bras latéral 11 sont liées au pavillon 1 par l'intermédiaire d'une charnière transversale d'articulation 14 constituée d'un bras coudé 15 pivotant par l'une de ses extrémités autour d'un axe d'articulation transversal 16 du pavillon 1 et ayant son extrémité opposée solidaire de l'extrémité 12 du bras latéral 11. En position de fermeture de l'ouverture2 par le caisson rehausseur 4, chaque bras coudé 15 s'étend en arrière du véhicule à partir de son extrémité articulée au pavillon 1.

Selon l'autre mode de réalisation représenté à la figure 5, les bras latéraux 11 sont montés articulés relativement au pavillon 1 par de simples charnières 14.

Le caisson rehausseur 4 est monté articulé sur les extrémités 13 des bras latéraux 11 entre une position inactive dans laquelle le caisson rehausseur 4 occupe une position suspendue aux bras 11 approximativement horizontale, comme représenté aux figures 1 et 2, et une position dans laquelle le caisson rehausseur 4 est rabattu vers l'avant du véhicule contre les deux bras 11 occupant leur position suspendue, comme représenté à la figure 3.

Pour ce faire, le caisson rehausseur 4 comprend une collerette 17 bordant l'ouverture du caisson 4 et l'une des parties transversale de la collerette 17 est reliée aux deux extrémités 13 des deux bras latéraux 11 par l'intermédiaire d'une articulation d'axe transversal au véhicule. Cette articulation peut être constituée de deux charnières 18 transversalement espacées l'une de l'autre.

Lorsque le caisson rehausseur 4 est en appui contre les bras latéraux 11, il est amoviblement fixé à ceux-ci par l'intermédiaire de moyens de verrouillage 20, 21 qui sont déverrouillables manuellement. Ces moyens de verrouillage 20, 21 sont chacun constitués par un crochet 20 solidaire du caisson rehausseur 4 à l'opposé de son articulation 18 aux bras 11 et un anneau 21, solidaire du bras 11 à proximité de son articulation 14 au pavillon 1, auquel anneau 21 peut être amoviblement accroché le crochet 20 correspondant.

Une fois le caisson rehausseur 4 fixe en appui contre les bras latéraux 11, l'ensemble constitué par les deux bras 11 et le caisson rehausseur 4 peut être basculé, autour de l'axe d'articulation 16 des deux bras 11 au pavillon 1, vers le pavillon 1 de manière à introduire le caisson rehausseur 4 renversé au travers de l'ouverture 2 du pavillon 1, comme visible à la figure 4.

Le caisson rehausseur 4 en position de fermeture est amoviblement fixé au pavillon 1 par des moyens de verrouillage 22, 23 qui sont déverrouillables manuellement.

Ces moyens de verrouillage 22, 23 sont constitués par deux pênes latéraux 22 qui sont solidaires des bras latéraux 11 en pouvant coulisser le long de ces bras et s'engager respectivement dans deux gâches 23 qui sont transversalement espacées du pavillon 1. Ces gâches 23 sont situées, à proximité du bord transversal arrière 2AR de l'ouverture 2 en dessous de ce bord et sont sensiblement perpendiculaires à ce bord 2AR.

Afin de faciliter le basculement de l'ensemble constitué par les bras 11 et le caisson rehausseur 4 de leur position suspendue à leur position d'obturation de l'ouverture 2, le pavillon de toit 1 comprend des vérins latéraux 24, gauche et droit, qui sont montés entre le pavillon 1 à proximité du bord avant 2AV de l'ouverture 2 et les extrémités 12 liées au pavillon 1 en étant transversalement espacés l'un de l'autre.

Avantageusement, un joint d'étanchéité 25 est fixé sur le bord périphérique de l'ouverture 2 du pavillon 1. Ce joint 25 présente un lobe inférieur 26 qui est destiné à coopérer sélectivement avec la face supérieure d'une collerette périphérique 27 du panneau rigide 3 en position fermée de ce panneau ou avec la face supérieure de la collerette périphérique 17 du caisson rehausseur 4 en position fermée de ce dernier.

De préférence, le panneau rigide 3 comprend un cadre rectangulaire 30 fermé par une vitre 31 et le caisson rehausseur 4 est réalisé au moins partiellement par un matériau rigide transparent tel que du verre.

Pour faire passer le pavillon de toit 1 de sa configuration dans laquelle l'ouverture 2 du pavillon 1 est obturée par le panneau rigide 3, comme représenté sur la figure 1, à sa configuration dans laquelle l'ouverture 2 du pavillon 1 est obturée par le caisson rehausseur 4, comme représenté sur la figure 4, l'utilisateur tire sur les pênes de verrouillage 8 du panneau rigide 3 afin de les désengager des gâches 9 du pavillon 1.

Ainsi, le panneau rigide 3 peut basculer en position suspendue, comme représenté aux figures 2 et 5, par pivotement autour de son axe d'articulation transversal 7. Grâce à l'effet des ressorts de rappel 10, le panneau rigide 3 est poussé automatiquement vers l'intérieur du véhicule.

Dans la position représentée aux figures 2 et 5, le caisson rehausseur 4 est toujours dans sa position inactive dans laquelle il occupe une position suspendue approximativement horizontale.

L'utilisateur rabat alors le caisson rehausseur 4 de sa position inactive à sa position rabattue en appui contre les bras latéraux 11, comme représenté à la figure 3. Puis, l'utilisateur engage les crochets 20 solidaires du caisson rehausseur 4 dans les anneaux 21 des bras latéraux 11. Un tel engagement peut s'effectuer automatiquement.

Dès lors, l'utilisateur remonte l'ensemble constitué par les bras latéraux 11 solidaires du caisson rehausseur 4 vers le pavillon 1 de manière à introduire le caisson rehausseur renversé 4 au travers de l'ouverture 2, ce basculement étant facilité par les vérins latéraux 24.

Puis, l'utilisateur pousse les pênes de verrouillage 22 du caisson rehausseur 4 vers l'arrière afin de les engager dans les gâches 23 du pavillon 1 et ainsi, à verrouiller le caisson rehausseur 4 en position d'obturation de l'ouverture 2.

Pour faire passer le pavillon de toit 1 de sa configuration dans laquelle l'ouverture 2 du pavillon 1 est obturée par le caisson rehausseur 4, comme représenté sur la figure 4, à sa configuration dans laquelle l'ouverture 2 du pavillon 1 est obturée par le panneau rigide 3, comme représenté sur la figure 1, l'utilisateur effectue les opérations suivantes.

Tout d'abord, il désengage les pênes de verrouillage 22 du caisson rehausseur 4, puis, il replace le caisson rehausseur 4, solidaire des bras latéraux 11, en position suspendue.

Ensuite, il désengage les crochets 20 du caisson rehausseur 4 des anneaux 21 des bras 11 et il replace le caisson rehausseur 4 à sa position suspendue approximativement horizontale.

Dès lors, l'utilisateur peut remonter le panneau rigide 3 de façon à ce qu'il obture l'ouverture 2 du pavillon 1 et engager ses pênes de verrouillage 8 dans les gâches 9 du pavillon 1.

Un tel un pavillon de toit 1 permet, tout en s'adaptant au style désiré, d'augmenter la hauteur de pavillon 1 du véhicule lorsque cela est nécessaire puisque la paroi de fond 4F du caisson 4, lorsque celui-ci occupe sa position de fermeture de l'ouverture 2, fait saillie relativement au pavillon 1 d'une hauteur permettant la réception de la tête d'un passager arrière dans le caisson 4.

De plus, le pavillon de toit 1 de l'invention présente des moyens permettant d'en assurer l'étanchéité pour les positions de fermeture du panneau rigide 3 et de fermeture du caisson rehausseur 4.

## Revendications

1. Pavillon de toit rigide (1) d'un véhicule automobile **caractérisé en ce qu'**il comprend une ouverture (2) pouvant être obturée sélectivement par un panneau rigide (3) se trouvant dans le plan du pavillon (1) à sa position de fermeture de l'ouverture (2) ou par un rehausseur de pavillon (4) en forme de caisson rehausseur ouvert renversé en position de fermeture de l'ouverture (2) de manière que sa paroi de fond (4F) fasse saillie d'une hauteur déterminée par rapport au dessus de pavillon (1).

2. Pavillon de toit (1) selon la revendication 1, **caractérisé en ce que** le panneau rigide (3) est monté articulé au bord transversal arrière (2AR) de l'ouverture (2) et peut être déplacé par basculement autour de son axe d'articulation transversale (7) de sa position de fermeture de l'ouverture (2) à une position dégagée en arrière dans l'habitacle du véhicule.

3. Pavillon de toit (1) selon la revendication 2, **caractérisé en ce que** le caisson rehausseur (4) est monté articulé par l'un de ses cotés transversaux (17) au véhicule aux deux extrémités (13) respectivement de deux bras latéraux (11) dont les extrémités opposées (12) sont montées articulées au pavillon (1) autour d'un axe transversal au véhicule (16) situé à proximité du bord transversal avant (2AV) de l'ouverture (2), et **en ce que**, lorsque le panneau rigide (3) occupe sa position dégagée en arrière du véhicule, le caisson rehausseur (4) peut être rabattu vers l'avant du véhicule, autour de ses articulations (18) aux deux bras (11), contre les deux bras (11) occupant une position suspendue de manière que les bras (11) soient en appui sur les deux cotés parallèles du caisson rehausseur (4) perpendiculaires aux deux bras (11), et **en ce que**, l'ensemble constitué par les deux bras (11) et le caisson rehausseur (4) peut être basculé, autour des axes d'articulation (16) des deux bras (11), vers le pavillon (1) de manière à introduire le caisson rehausseur renversé (4) au travers de l'ouverture (2) du pavillon (1).

4. Pavillon de toit (1) selon la revendication 3, **caractérisé en ce que** le caisson rehausseur (4), lors de son basculement à sa position en appui sur les bras (11), est amoviblement fixé à ces bras (11) par des moyens de verrouillage (20, 21) déverrouillables manuellement.

5. Pavillon de toit (1) selon la revendication 4, **caractérisé en ce que** les moyens de verrouillage (20, 21) du caisson rehausseur (4) aux deux bras (11) sont chacun constitués par un crochet (20) solidaire du caisson rehausseur (4) à l'opposé de ses articulations (16) aux bras (11) et un anneau (21), solidaire du bras (11) à proximité de son articulation (14) au pavillon (1), le crochet (20) de verrouillage pouvant être amoviblement accroché à l'anneau (21).

6. Pavillon de toit (1) selon l'une des revendications 3 à 5, **caractérisé en ce que** le caisson rehausseur (4) en position de fermeture est amoviblement fixé au pavillon (1) par des moyens de verrouillage (22, 23) déverrouillables manuellement.

7. Pavillon de toit (1) selon la revendication 6, **caractérisé en ce que** les moyens de verrouillage (22, 23) sont constitués par deux pênes latéraux (22) solidaires des deux bras (11) et pouvant s'engager respectivement dans deux gâches (23) fixes transversalement espacées du pavillon (1) et situées à proximité du bord transversal arrière (2AR) de l'ouverture (2) du pavillon (1).

8. Pavillon de toit (1) selon l'une des revendications précédentes, **caractérisé en ce que** le panneau rigide (3) en position de fermeture est amoviblement fixé au pavillon (1) par des moyens de verrouillage (8, 9) déverrouillables manuellement.

9. Pavillon de toit (1) selon la revendication 8, **caractérisé en ce que** les moyens de verrouillage (8, 9) sont constitués par deux pênes latéraux (8) solidaires du panneau rigide (3) et pouvant s'engager respectivement dans deux gâches (9) fixes transversalement espacées du pavillon (1) et situées à proximité du bord transversal avant (2AV) de l'ouverture (2) du pavillon (1).

10. Pavillon de toit (1) selon l'une des revendications précédentes, **caractérisé en ce qu'**il comprend un joint d'étanchéité (25) fixé sur les bords périphériques de l'ouverture (2) du pavillon (1) et étant destiné à coopérer sélectivement avec la face supérieure d'une collerette périphérique (27) du panneau rigide (3) en position fermée ou avec la face supérieure d'une collerette périphérique (17) du caisson rehausseur (4) en position fermée.

11. Pavillon de toit (1) selon l'une des revendications 2 à 10, **caractérisé en ce qu'**il comprend des ressorts de rappel (10) montés entre le bord transversal arrière (2AR) de l'ouverture (2) du pavillon (1) et le bord du panneau rigide (3) qui est monté articulé sur le panneau fixe et permettant d'amener le panneau rigide (3) à sa position dégagée en arrière dans l'habitacle du véhicule.

12. Pavillon de toit (1) selon l'une des revendications 3 à 11, **caractérisé en ce qu'**il comprend deux vérins latéraux d'assistance au basculement (24) du caisson rehausseur (4) solidaire des bras (11) de leur position suspendue à leur position de rehaussage au travers de l'ouverture (2) du pavillon (1).

13. Pavillon de toit (1) selon l'une des revendications 2 à 12, **caractérisé en ce que** en position dégagée, le panneau rigide (3) occupe une position suspendue inclinées vers l'arrière du véhicule.

14. Pavillon de toit (1) selon l'une des revendications 3 à 11, **caractérisé en ce que** en position inactive, le caisson rehausseur (4) occupe une position suspendue aux bras (11) approximativement horizontale.

15. Pavillon de toit (1) selon l'une des revendications précédentes, **caractérisé en ce que** le panneau rigide (3) comprend un cadre rectangulaire (30) fermé par une vitre (31).

16. Pavillon de toit (1) selon l'une des revendications précédentes, **caractérisé en ce que** le caisson rehausseur (4) est réalisé au moins partiellement par un matériau rigide transparent tel que du verre.

## Claims

1. Rigid roof (1) for a motor vehicle, **characterized in that** it comprises an opening (2) that can be closed selectively by a rigid panel (3) which is in the plane of the roof (1) when in its position of closure of the opening (2), or by a roof elevator (4) in the form of an open elevating box which is inverted in the closed position of the opening (2), in such a way that its top wall (4F) projects a predetermined amount above the roof top (1).

2. Roof (1) according to Claim 1, **characterized in that** the rigid panel (1) is hinged to the rear transverse edge (2AR) of the opening (2) and can be pivoted about its transverse hinge axis (7) from its position of closure of the opening (2) to a retracted position towards the rear inside the passenger compartment of the vehicle.

3. Roof (1) according to Claim 2, **characterized in that** the elevator box (4) is hinged by one of its transverse sides (17) to the vehicle to the two ends (13) of two respective lateral arms (11), the other ends (12) of which are hinged to the roof (1) about a transverse axis relative to the vehicle (16) which is located near the front transverse edge (2AV) of the opening (2), and **in that**, when the rigid panel (3) is in its retracted position towards the rear of the vehicle, the elevator box (4) can be swung towards the front of the vehicle, about the hinges (18) between it and the two arms (11), against the two arms (11) which are in a suspended position in such a way that the arms (11) are in contact with the two parallel sides of the elevator box (4) that are perpendicular to the two arms (11), and **in that** the assembly formed by the two arms (11) and the elevator box (4) can be rotated about the hinge pins (16) of the two arms (11) towards the roof (1) in such a way as to pass the inverted elevator box (4) through the opening (2) of the roof (1).

4. Roof (1) according to Claim 3, **characterized in that** the elevator box (4), when rotated to its position of contact with the arms (11), is attached removably to these arms (11) by manually releasable locking means (20, 21).

5. Roof (1) according to Claim 4, **characterized in that** the locking means (20, 21) for locking the elevator box (4) to the two arms (11) each consist of a hook (20) attached to the elevator box (4) at the opposite end from the hinges (16) between it and the arms (11), and a ring (21), attached to the arm (11) close to the hinge (14) between it and the roof (1), which locking ring (20) can be secured removably to the ring (21).

6. Roof (1) according to one of Claims 3 to 5, **characterized in that** the elevator box (4) in the closed position is removably fixed to the roof (1) by manually releasable locking means (22, 23).

7. Roof (1) according to Claim 6, **characterized in that** the locking means (22, 23) consists of two lateral bolts (22) attached to the two arms (11) and able to engage in two respective fixed strikers (23) transversely spaced apart on the roof (1) and located close to the rear transverse edge (2AR) of the roof (1) opening (2).

8. Roof (1) according to one of the preceding claims, **characterized in that** the rigid panel (3) in the closed position is removably fixed to the roof (1) by manually releasable locking means (8, 9).

9. Roof (1) according to Claim 8, **characterized in that** the locking means (8, 9) consist of two lateral bolts (8) attached to the rigid panel (3) and able to engage in two respective fixed strikers (9) transversely spaced apart on the roof (1) and situated close to the forward transverse edge (2AV) of the roof (1) opening (2).

10. Roof (1) according to one of the preceding claims, **characterized in that** it comprises a seal (25) fixed to the peripheral edges of the roof (1) opening (2) and designed to engage selectively with the upper face of a peripheral collar (27) of the rigid panel (3) in the closed position, or with the upper face of a peripheral collar (17) with the elevator box (4) in the closed position.

11. Roof (1) according to one of Claims 2 to 10, **characterized in that** it comprises return springs (10) fitted between the rear transverse edge (2AR) of roof (1) opening (2) and the edge of the rigid panel (3) which is hinged to the fixed panel, allowing the rigid panel (3) to be moved to its retracted position towards the rear inside the passenger compartment of the vehicle.

12. Roof (1) according to one of Claims 3 to 11, **characterized in that** it includes two lateral cylinders (24) to assist the rotation of the elevated box (4) attached to the arms (11) from their suspended position to their elevating position through the roof (1) opening (2).

13. Roof (1) according to one of Claims 2 to 12, **characterized in that** in the retracted position the rigid panel (3) occupies a suspended position inclined towards the rear of the vehicle.

14. Roof (1) according to one of Claims 3 to 11, **characterized in that** in the inactive position the elevator box (4) occupies an approximately horizontal position suspended from the arms (11).

15. Roof (1) according to one of the preceding claims, **characterized in that** the rigid panel (3) comprises a rectangular frame (30) closed by a transparent panel (31).

16. Roof (1) according to one of the preceding claims, **characterized in that** the elevator box (4) is at least partly made of a transparent rigid material such as glass.

## Patentansprüche

1. Starres Verdeck (1) eines Kraftfahrzeugs, **dadurch gekennzeichnet, dass** es eine Öffnung (2) aufweist, die wahlweise durch eine starre Platte (3), die sich in ihrer Position, in der die Öffnung (2) verschlossen ist, in der Ebene des Verdecks (1) befindet, oder durch einen Verdeckerhöher (4) in Form eines offenen Erhöhungskastens, der in der Position, in der die Öffnung (2) verschlossen ist, umgedreht ist, derart, dass seine Bodenwand (4F) um eine vorgegebene Höhe in Bezug auf die Oberseite des Verdecks (1) vorsteht, verschlossen werden kann.

2. Verdeck (1) nach Anspruch 1, **dadurch gekennzeichnet, dass** die starre Platte (3) an der hinteren Querkante (2AR) der Öffnung (2) angelenkt ist und durch Schwenken um ihre transversale Schwenkachse (7) aus ihrer Position, in der die Öffnung (2) verschlossen ist, in eine nicht befestigte Position hinter dem Fahrgastraum des Fahrzeugs verlagert werden kann.

3. Verdeck (1) nach Anspruch 2, **dadurch gekennzeichnet, dass** der Erhöhungskasten (4) an einer seiner transversalen Seiten (17) am Fahrzeug an zwei Enden (13) von zwei entsprechenden Seitenarmen (11) angelenkt ist, deren gegenüberliegende Enden (12) am Dach (1) schwenkbar um eine transversale Achse des Fahrzeugs (16), die sich in der Nähe der vorderen transversalen Kante (2AV) der Öffnung (2) befindet, angelenkt sind, und dass dann, wenn die starre Platte (3) ihre nicht befestigte Position im hinteren Bereich des Fahrzeugs einnimmt, der Erhöhungskasten (4) zur Vorderseite des Fahrzeugs um seine Gelenke (18) an den zwei Armen (11) gegen die zwei Arme (11), die eine aufgehängte Position einnehmen, umgelegt werden kann, derart, dass sich die Arme (11) auf den zwei parallelen Seiten des Erhöhungskastens (4), die zu den zwei Armen (11) senkrecht sind, abstützen, und dass die Gesamtheit, die durch die zwei Arme (11) und den Erhöhungskasten (4) gebildet ist, um Schwenkachsen (16) der zwei Arme (11) zu dem Verdeck (1) geschwenkt werden kann, derart, dass der umgedrehte Erhöhungskasten (4) durch die Öffnung (2) des Verdecks (1) eingeführt werden kann.

4. Verdeck (1) nach Anspruch 3, **dadurch gekennzeichnet, dass** der Erhöhungskasten (4) bei seiner Schwenkung in die Abstützposition auf den Armen (11) an diesen Armen (11) durch manuell entriegelbare Verriegelungsmittel (20, 21) lösbar befestigt ist.

5. Verdeck (1) nach Anspruch 4, **dadurch gekennzeichnet, dass** die Verriegelungsmittel (20, 21) des Erhöhungskastens (4) an den zwei Armen (11) jeweils durch einen Haken (20), der mit dem Erhöhungskasten (4) gegenüber seinen Gelenken (16) an den Armen (11) fest verbunden ist, und durch einen Ring (21), der mit dem Arm (11) in der Nähe seines Gelenks (4) am Verdeck (1) fest verbunden ist, gebildet sind, wobei der Verriegelungshaken (20) in den Ring (21) lösbar eingehakt werden kann.

6. Verdeck (1) nach einem der Ansprüche 3 bis 5, **dadurch gekennzeichnet, dass** der Erhöhungskasten (4) in der geschlossenen Position am Verdeck (1) durch manuell entriegelbare Verriegelungsmittel (22, 23) lösbar befestigt ist.

7. Verdeck (1) nach Anspruch 6, **dadurch gekennzeichnet, dass** die Verriegelungsmittel (22, 23) durch zwei seitliche Riegel (22) gebildet sind, die mit den zwei Armen (11) fest verbunden sind und in zwei entsprechenden transversal beabstandeten festen Rasten (23) des Verdecks (1), die sich in der Nähe der hinteren transversalen Kante (2AR) der Öffnung (2) des Verdecks (1) befinden, in Eingriff gelangen können.

8. Verdeck (1) nach einem der vorhergehenden Ansprüche, **dadurch gekennzeichnet, dass** die starre Platte (3) in der geschlossenen Position am Verdeck (1) durch manuell entriegelbare Verriegelungsmittel (8, 9) lösbar befestigt ist.

9. Verdeck (1) nach Anspruch 8, **dadurch gekennzeichnet, dass** die Verriegelungsmittel (8, 9) durch zwei seitliche Riegel (8) gebildet sind, die mit der starren Platte (3) fest verbunden sind und in zwei transversal beabstandeten festen Rasten (9) des Verdecks (1), die sich in der Nähe der vorderen transversalen Kante (2AV) der Öffnung (2) des Verdecks (1) befinden, in Eingriff gelangen können.

10. Verdeck (1) nach einem der vorhergehenden Ansprüche, **dadurch gekennzeichnet, dass** es eine an den Umfangskanten der Öffnung (2) des Verdecks (1) befestigte Dichtung (25) aufweist, die dazu bestimmt ist, wahlweise mit der oberen Fläche eines Umfangskranzes (27) der starren Platte (3) in der geschlossenen Position oder mit der oberen Fläche eines Umfangskranzes (17) des Erhöhungskastens (4) in der geschlossenen Position zusammenzuwirken.

11. Verdeck (1) nach einem der Ansprüche 2 bis 10, **dadurch gekennzeichnet, dass** es Rückstellfedern (10) aufweist, die zwischen der hinteren transversalen Kante (2AR) der Öffnung (2) des Verdecks (1) und der Kante der starren Platte (3), die an der festen Platte angelenkt ist, montiert sind und ermöglichen, die starre Platte (3) in ihre nicht befestigte Position im hinteren Bereich des Fahrgastraums des Fahrzeugs zu bringen.

12. Verdeck (1) nach einem der Ansprüche 3 bis 11, **dadurch gekennzeichnet, dass** es zwei seitliche Stellzylinder für die Unterstützung der Schwenkung (24) des mit den Armen (11) fest verbundenen Erhöhungskastens (4) aus ihrer aufgehängten Position in ihre Erhöhungsposition durch die Öffnung (2) des Verdecks (1) enthält.

13. Verdeck (1) nach einem der Ansprüche 2 bis 12, **dadurch gekennzeichnet, dass** die starre Platte (3) in der nicht befestigten Position eine zur Rückseite des Fahrzeugs geneigte aufgehängte Position einnimmt.

14. Verdeck (1) nach einem der Ansprüche 3 bis 11, **dadurch gekennzeichnet, dass** der Erhöhungskasten (4) in der inaktiven Position eine angenähert horizontale, an den Armen (11) aufgehängte Position einnimmt.

15. Verdeck (1) nach einem der vorhergehenden Ansprüche, **dadurch gekennzeichnet, dass** die starre Platte (3) einen durch eine Glasscheibe (31) geschlossenen rechtwinkligen Rahmen (30) enthält.

16. Verdeck (1) nach einem der vorhergehenden Ansprüche, **dadurch gekennzeichnet, dass** der Erhöhungskasten (4) wenigstens teilweise aus einem lichtdurchlässigen starren Material wie etwa Glas verwirklicht ist.
